Europäisches Patentamt

European Patent Office

Office européen des brevets

(11) Numéro de publication : **0 504 023 A1**

(19)

# (12) DEMANDE DE BREVET EUROPEEN

(21) Numéro de dépôt : 92400588.7

(22) Date de dépôt : 06.03.92

(51) Int. Cl.⁵ : **H04N 5/33,** H04N 5/225

(30) Priorité : 15.03.91 FR 9103185

(43) Date de publication de la demande :
**16.09.92 Bulletin 92/38**

(84) Etats contractants désignés :
**DE FR GB IT**

(71) Demandeur : **THOMSON-CSF**
**51, Esplanade du Général de Gaulle**
**F-92800 Puteaux (FR)**

(72) Inventeur : **Colas, Daniel**
**THOMSON-CSF, SCPI, Cédex 67**
**F-92045 Paris la Défense (FR)**
Inventeur : **Trahand, Jean-Pierre**
**THOMSON-CSF, SCPI, Cédex 67**
**F-92045 Paris la Défense (FR)**

(74) Mandataire : **Turlèque, Clotilde et al**
**THOMSON-CSF SCPI**
**F-92045 PARIS LA DEFENSE CEDEX 67 (FR)**

(54) **Caméra d'observation bispectrale.**

(57)     L'invention concerne la prise de vue simultanée dans le domaine des radiations visibles et dans le domaine des radiations infrarouges à l'aide d'une caméra bispectrale fournissant deux signaux vidéo (S1) et (S2) correspondant à chacun de ces domaines.

     La caméra bispectrale selon l'invention possède des moyens d'analyse de la scène observée comportant un moyen de filtrage bispectral (3) transmettant séparémment les radiations de chacun des domaines de radiations, associés à un détecteur à transfert de charges (4) produisant un signal vidéo intermédiaire (SI), et des moyens de traitement et de démultiplexage (7, 8) pour fournir les deux signaux vidéo (S1) et (S2) à partir du signal (SI).

     Application aux dispositifs de visualisation en fausses couleurs pour la visée et la poursuite de cibles.

FIG.1

L'invention concerne la prise de vues dans un large domaine spectral pour la visée et la poursuite de cibles et a pour objet, plus particulièrement, une caméra d'observation bispectrale dans deux domaines de radiations différents, visible et infrarouge.

L'exploitation séparée du domaine des radiations visibles, de longueurs d'onde 0,4 à 0,7μm, et du domaine des radiations proches infrarouges, de longueurs d'onde 0,7 à 2μm, dans une même caméra permet de s'affranchir de l'inversion de contraste de la scène observée aux environs de la longueur d'onde de 0,7 micron ; ainsi, les contrastes d'intensité lumineuse se compensant plus ou moins dans les deux domaines, il est nécessaire de séparer les deux domaines afin de conserver un contraste suffisant.

Selon les conditions atmosphériques et selon la scène observée, il est avantageux de favoriser l'observation dans l'un ou l'autre domaine. Par exemple, à grande distance, l'atténuation lumineuse et la dégradation du contraste sont plus limitées dans le domaine infrarouge. Si la caméra se rapproche, le contraste peut devenir alors meilleur dans le domaine des radiations visibles.

La prise de vues dans un large domaine spectral est rendue possible grâce à l'utulisation de détecteurs matriciels à circuit à transfert de charges de type CCD (initiale de "Charged Coupled Device" en terminologie anglo-saxonne) ayant une large sensibilité spectrale, s'étendant du domaine visible au domaine infrarouge.

Afin de pouvoir exploiter séparément et simultanément ces deux domaines de radiation, les caméras vidéo dites bispectrales sont équipées de deux détecteurs CCD qui reçoivent respectivement, après séparation du faisceau lumineux incident, un faisceau de radiations visibles et un faisceau de radiations infrarouges. Une caméra bispectrale fournit deux signaux vidéo qui, par combinaison dans un mélangeur de signaux, forment trois signaux de couleur afin d'afficher une image dite "en fausses couleurs" sur le moniteur de contrôle. Une caméra de ce type est décrite par exemple dans le brevet FR 2 650 929, déposé au nom de la Demanderesse.

Cependant, la présence de deux détecteurs et d'un séparateur spectral présente des inconvénients tant sur le plan technologique, du fait de leur encombrement, que sur le plan optique, du fait de l'épaisseur de l'élément séparateur, et sur le plan électronique, l'existence de deux signaux vidéo formés à partir de deux voies de détections indépendantes entraînant des problèmes de simultanéité de transmission et de multiplexage.

Afin de s'affranchir de ces inconvénients, la présente invention consiste à utiliser un filtrage spectral séquentiel attribuant les charges, libérées, par la matrice de détection d'un détecteur CCD, à l'un ou à l'autre des deux domaines de radiations. A la sortie du détecteur CCD, les informations correspondant à chaque domaine de radiations sont séparées pour reconstituer deux signaux correspondant aux deux domaines spectraux.

Plus précisément, l'invention a pour objet une caméra d'observation bispectrale, comportant des moyens d'analyse de la scène observée pour fournir un premier et un second signal vidéo de sortie représentant, respectivement, une observation dans le domaine des radiations visibles et une observation dans le domaine des radiations infrarouges, caractérisée en ce que les moyens d'analyse comportent un moyen de filtrage spectral transmettant, pour partie, un premier domaine spectral de radiations et pour partie, un second domaine spectral de radiations, cet élément étant associé à un seul détecteur matriciel à transfert de charges pour fournir un signal vidéo intermédiaire, et en ce que des moyens de traitement et de démultiplexage founissent les deux signaux vidéo de sortie à partir du signal vidéo intermédiaire.

Deux modes de réalisation concernant les moyens de filtrage spectral sont par ailleurs proposés, l'un assurant un filtrage spectral de type spatial et l'autre un filtrage spectral de type temporel.

L'invention sera mieux comprise, et d'autres caractéristiques et avantages apparaîtront à la lecture de la description qui suit, faite en référence aux figures annexées qui représentent :

    – la figure 1, le schéma synoptique d'un exemple de réalisation de la caméra bispectrale selon l'invention ;

    – les figures 2a et 2b, deux exemples d'un premier mode de réalisation de l'élément de filtrage spectral de la caméra bispectrale selon l'invention ;

    – les figures 3a à 3d, quatre exemples d'un second mode de réalisation de l'élément de filtrage spectral de la caméra bispectrale selon l'invention.

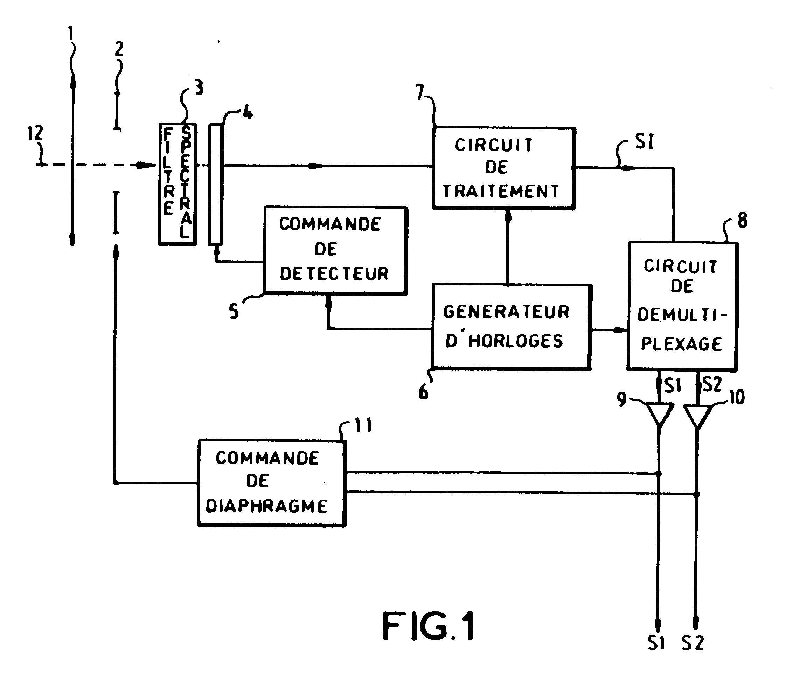

La caméra bispectrale selon l'invention, telle que représentée par le schéma synoptique de la figure 1, comporte un objectif de réception 1, un diaphragme réglable 2, un filtre spectral 3, un détecteur matriciel à transfert de charges 4, un circuit de commande 5 du détecteur 4, un générateur d'horloges 6, un circuit de prétraitement CP, un circuit de traitement de signal 7, un circuit de démultiplexage 8, deux amplificateurs vidéo 9 et 10, et un dispositif de commande 11 d'ouverture du diaphragme.

Le filtre spectral 3 transmet séparément les radiations visibles et les radiations infrarouges provenant d'un faisceau lumineux incident 12.

Une première sortie du générateur d'horloges 6 est reliée à une entrée du circuit de commande 5 du détecteur 4 pour appliquer les signaux de commande adaptés au type de détecteur matriciel utilisé. Par l'intermédiaire du circuit de prétraitement classique CP effectuant un filtrage électronique, la sortie du détecteur matriciel 4 est reliée à une entrée du circuit de traitement de signal 7 afin d'obtenir, par échantillonnage, double échantillonnage, ou double échantillonnage corrélé, un signal vidéo intermédiaire SI où alternent les informations relatives à chaque domaine spectral, visible et infrarouge. Une sortie du générateur d'horloges 6 est reliée à une entrée du circuit de traitement 7 pour fournir des signaux adaptés au type de transfert de charges effectué dans le détecteur 4 afin de commander les fréquences d'échantillonnage correspondantes. Le signal vidéo intermédiaire SI est appliqué à une entrée du circuit de démultiplexage 8 pour constituer en sortie deux signaux vidéo, S1 et S2. Une autre entrée du circuit de démultiplexage 8 est reliée à une sortie du générateur d'horloge 6 afin de gérer temporellement le circuit 8.

Les signaux vidéo S1 et S2 représentent, après amplification à travers les amplificateurs vidéo 9 et 10, une même scène transmise par le faisceau lumineux incident 12 et analysée, respectivement, dans le domaine des radiations visibles et dans le domaine des radiations infrarouges. Le dispositif de commande de diaphragme 11, relié aux sorties des amplificateurs 9 et 10, règle l'ouverture du diaphragme 2 en fonction des informations de niveau de signal lui parvenant, afin d'asservir le niveau d'éclairement au niveau de signal de sortie souhaité. Un traitement ultérieur des signaux vidéo S1 et S2, à l'aide de moyens connus, permet de constituer alors une image en fausses couleurs sur un moniteur de contrôle par combinaison pondérée des signaux S1 et S2. Les signaux S1 et S2 étant formés à partir d'une même voie de détection (3 à 7), aucun problème de simultanéité de transmission ou de multiplexage ultérieur ne se pose.

Le filtrage spectral peut être effectué, selon un premier mode de réalisation, séquentiellement dans l'espace par transmission des radiations visibles et infrarouges spatialement séparées à travers un filtre constitué de bandes à transmission spectrale sélective.

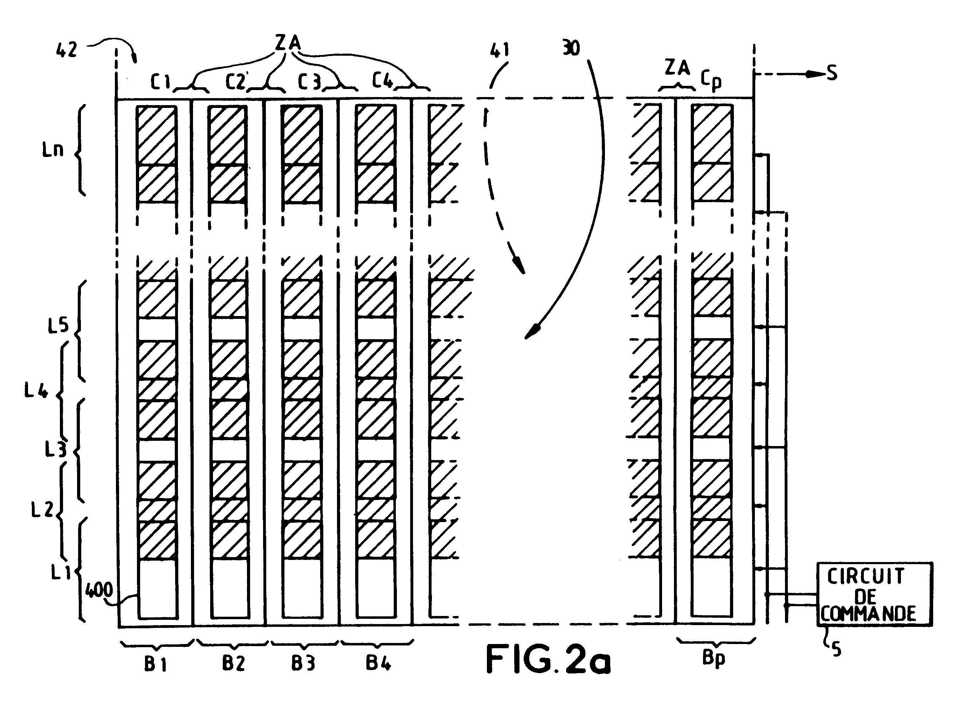

L'orientation et les dimensions des bandes à transmission spectrale sélective dépendent de la géométrie, des dimensions et des modes de transfert des charges du détecteur CCD utilisé. Dans le cas schématiquement représenté à titre d'exemple sur la figure 2a, un filtre 30, associé à un détecteur CCD à transfert de trame, est constitué de zones de transmission en forme de bandes verticales B1, B2, B3, ..., Bp de largeur constante et de longueur égale à celle de la partie sensible 41 du détecteur ; ces bandes laissent passer, alternativement, les radiations visibles, par exemple, par les bandes de rang impair (B1, B3, ...), et les radiations infrarouges par les bandes de rang pair (B2, B4, ...). Cette configuration est justifiée par les raisons exposées ci-après.

Le détecteur CCD à transfert de trame utilisé est un détecteur 2/3 de pouce à substrat au silicium, ayant une partie sensible 41 de surface égale à 8, 8mmx6, 6mm, une partie mémoire 42 de surface sensiblement identique et un registre à décalage horizontal (non représenté). Les cellules de détection, telles que 400, de dimensions utiles 6µmx23µm, sont disposées à l'intersection de colonnes C1, C2, C3, ..., Cp, avec un pas de 11,5µm, les colonnes étant séparées par des zones aveugles ZA de 5,5µm de large, et des lignes L1, L2, L3, ..., Ln. En fonctionnement, les charges sont accumulées alternativement sous les cellules des lignes paires ou impaires, commandées par le circuit de commande 5, puis sont transférées sous les cellules de même localisation dans la partie mémoire du détecteur, pour former une trame d'image respectivement paire ou impaire. Un signal série de sortie S est formé par transfert des charges dans le registre à décalage horizontal de sortie non représenté. Dans ce type de détecteur, les cellules de rangs pairs et de rangs impairs se recouvrent partiellement, selon la direction verticale, les cellules de rang pair apparaissant hachurées sur la figure, si bien que les limites d'intégration des charges entre les cellules d'une même colonne varient à chaque trame. Cette particularité impose une orientation verticale aux bandes rectangulaires B1, B2, B3, ..., Bp de largeur égale au pas des colonnes des cellules du détecteur.

Pratiquement, le filtre 30 peut être réalisé en déposant, sur un substrat de verre mince de dimensions égales à celles du détecteur CCD, des bandes de 11,5µm de large de matière correspondant alternativement à l'un ou l'autre des domaines spectraux à transmettre. Le filtre est positionné et fixé sur la surface du détecteur par tout moyen connu, le positionnement devant faire coïncider les limites des bandes avec les zones aveugles ZA.

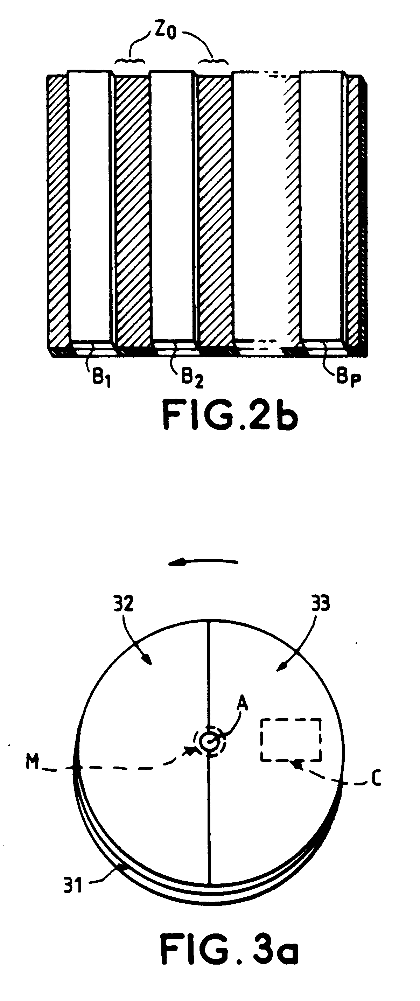

Dans un autre exemple de réalisation, illustré sur la figure 2b, les bandes à transmission alternée ne sont plus jointives, ce qui est moins contraignant. Le substrat de verre comporte entre les bandes des zones opaques ZO de largeur limitée par celle des zones aveugles. En outre, cette variante apporte plus de tolérance dans le positionnement du filtre.

Dans le cas où le détecteur CCD réalise un véritable entrelacement des trames, c'est-à-dire à partir de cellules de détection de rangs pairs et de rangs impairs ne se chevauchant pas d'une trame à l'autre, par exemple si le détecteur CCD est du type à transfert interligne, les bandes du filtre peuvent aussi bien être verticales, chaque bande recouvrant alors une ou plusieurs colonnes de cellules, qu'horizontales, chaque bande recouvrant alors une ou plusieurs lignes de cellules.

Selon un second mode de réalisation, le filtrage spectral s'effectue séquentiellement dans le temps, par passages successifs de différentes zones à transmission spectrale sélective, chaque zone recouvrant pendant une durée donnée toute la surface du détecteur.

Un premier exemple de mise en oeuvre d'un tel filtrage "en mode temporel" est illustré sur la figure 3a.

Un support 31 en forme de disque, entraîné par un moteur M, tourne autour d'un axe A, situé hors de la surface du détecteur 4 dont la limite est symbolisée par le contour en pointillés C. Le support 31 supporte un élément filtrant en forme de disque composé de deux filtres, 32 et 33 ayant une forme de demi-disque, chacun des filtres étant à transmission spectrale sélective, respectivement dans le domaine visible et dans le domaine infrarouge. Lorsque le disque tourne, en phase avec les temps de transfert de charges du détecteur, le passage d'un filtre à l'autre devant le détecteur 4 a lieu en synchronisme avec les fins de trames commandées par le circuit 5.

La vitesse de rotation du support 31 est telle qu'un demi-tour de disque est effectué soit pendant le temps d'intégration d'une trame d'image, soit pendant le temps d'intégration de deux trames consécutives constituant une image complète. Le premier cas consiste à alterner une trame correspondant à un domaine de radiations avec une trame correspondant à un autre domaine de radiations, en réalisant une analyse bispectrale "séquentielle de trame". Le second cas consiste à alterner deux trames correspondant au premier domaine de radiations à deux trames correspondant au second domaine de radiations, en réalisant une analyse bispectrale "séquentielle d'image".

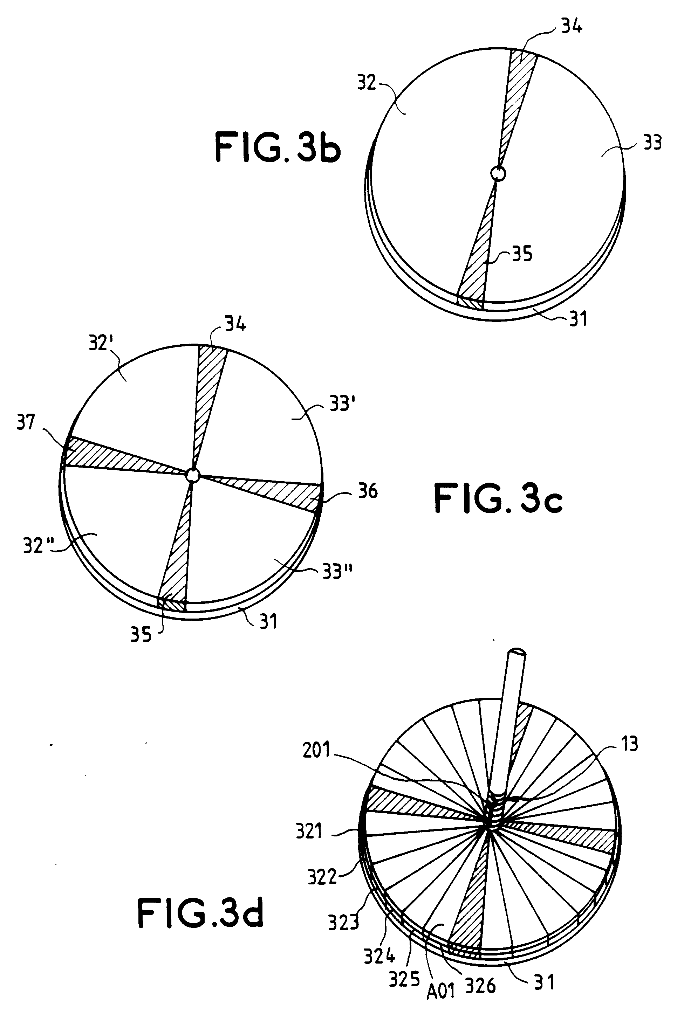

Selon un deuxième exemple de réalisation, illustré sur la figure 3b, les filtres de transmission 32, 33 prennent la forme de deux secteurs séparés par deux secteurs 34, 35 opposés par le sommet et rendus opaques afin d'utiliser l'élément filtrant comme véritable obturateur à chaque changement de trame. Lorsque le changement de transmission spectrale est assuré en mode "bispectral de trame", un demi-tour de rotation correspondant à une trame, il suffit que le disque 31 comporte les deux secteurs ,opaques 34, 35 afin de masquer le détecteur deux fois par tour de rotation en synchronisme avec le changement de trame.

Le changement de transmission spectrale peut également être effectué en "bispectral d'image", un demi tour correspondant à deux trames entrelacées formant une image ; il est alors prévu, en référence à la figure 3c, deux secteurs opaques supplémentaires 36, 37 pour que le masquage du détecteur se produise aux quatre changements de trame par tour de rotation du disque 31. Les secteurs opaques 36 et 37 séparent chacun des filtres 32 et 33 en deux secteurs opposés par le sommet, respectivement 32′, 32″ et 33′ et 33″.

La présence de secteurs opaques dans l'élément de filtrage est particulièrement bien adaptée au cas où le détecteur est un détecteur CCD à transfert de trame. En effet, dans un tel détecteur, les cellules de la partie sensible servent à la fois à l'intégration des charges et au transfert vertical de ces charges, chaque colonne de cellules faisant alors office de registre à décalage vertical. Ainsi, lors de ce transfert vertical, des charges continuent à être créées dans les cellules exposées en continu au faisceau de lumière incidente, et viennent s'ajouter au transit vertical. Ce défaut, dit de "smearing" ("traînée" en terminologie anglo-saxonne), est supprimé grâce au masquage du détecteur, vis-à-vis du faisceau incident, opéré par les secteurs opaques pendant les transferts verticaux des charges, aucune charge nouvelle n'étant alors créée dans les cellules.

Afin d'adapter l'éclairement reçu par le détecteur à la plage de sensibilité de celui-ci, il est intéressant de pouvoir varier la largeur des secteurs opaques à la lumière. Dans ce but, la figure 3d montre un exemple de réalisation dans lequel les filtres à secteurs opaques sont de largeur variable : chaque secteur à transmission spectrale sélective 32, 32′ et 33, 33′, est organisé en sous-secteurs, par exemple en 6 sous-secteurs sur la figure 3d, par exemple 321 à 326,dont le nombre et la largeur sont déterminés par la présence d'autant d'atténuateurs électro-optiques les recouvrant.

Chaque atténuateur électro-optique, tel que A01, commande l'éclairement du sous-secteur sous-jacent, 326 dans l'exemple illustré, en " tout ou rien ", grâce aux signaux fournis par un circuit de commande (non représenté). Ces signaux sont applicables aux atténuateurs électro-optiques par activation de connexions, telle que 201, montées sur un collecteur circulaire à bagues 13 (une seule connexion étant représentée pour la clarté de la figure) ; le nombre de connexions correspond à l'angle d'ouverture de transmission des secteurs filtrant 32′, 32″, 33′, 33″. Les atténuateurs électro-optiques sont par exemple constitués d'une couche de cristaux liquides disposée entre deux électrodes de polarisation.

L'invention n'est pas limitée aux exemples de réalisation décrits et représentés, en particulier

– pour le filtrage spectral en mode spatial, les bandes à transmission sélective, peuvent être constitués de filtres qui laissent passer, alternativement, le domaine de radiations total (visible et infrarouge) et l'un des deux domaines spectraux considérés (visible ou infrarouge). Le signal vidéo S1 correspondant à l'autre domaine de radiations est alors reconstitué par différence entre S′ et S2, S′ étant le signal vidéo de sortie correspondant au domaine de radiations total. Cette solution présente l'avantage de fournir un bon rapport signal/bruit pour le premier signal vidéo ;

– pour le filtrage spectral en mode temporel, les filtres peuvent être associés à des atténuateurs optiques de même dimension commandés de façon à n'être passant que pendant une fraction de la durée d'une trame. Dans ce cas, le nombre de connexions est réduit.

L'invention permet en définitive, à l'aide d'une architecture de caméra peu encombrante et relativement simple à mettre en oeuvre, de transmettre simultanément deux signaux vidéo correspondant aux domaines visible et infrarouge, afin de reconstituer des images correctement synchronisées dans un large domaine spectral, avec un bon contraste. La faible diminution de résolution de l'image, qui résulte du partage de celle-ci afin de reconstituer une image correspondant à chacun des domaines, n'affecte pas les performances de ce type de caméra dans ses applications habituelles (localisation et poursuite de cibles).

## Revendications

1. Caméra d'observation bispectrale, comportant des moyens d'analyse de la scène observée pour fournir un premier et un second signal vidéo de sortie (S1, S2) représentant, respectivement, une observation dans le domaine des radiations visibles et une observation dans le domaine des radiations infrarouges, caractérisée en ce que les moyens d'analyse comportent un élément de filtrage spectral (3) transmettant pour partie un premier domaine spectral de radiations et pour partie un second domaine spectral de radiations, cet élément étant associé à un seul détecteur matriciel à transfert de charges (4) comportant n lignes (L1, L2, ... Ln) et p colonnes (C1, C2, ..., Cp) de cellules de détection, pour fournir un signal vidéo intermédiaire (SI), et en ce que des moyens de traitement et de démultiplexage (7, 8) fournissent les deux signaux vidéo de sortie (S1, S2) à partir du signal vidéo intermédiaire (SI).

2. Caméra d'observation bispectrale selon la revendication 1, caractérisée en ce que le moyen de filtrage spectral (3) est constitué de filtres disposés en bandes (B1, B2, B3, ... Bn) transmettant, alternativement, les radiations du premier domaine spectral et les radiations du second domaine spectral, chaque bande recouvrant au moins une colonne (C1, C2, C3, ..., Cp) de la matrice de cellules du détecteur (4).

3. Caméra d'observation bispectrale selon la revendication 1, caractérisée en ce que le moyen de filtrage spectral (3) est constitué de filtres disposés en bandes (B1, B2, B3, ... Bn) transmettant, alternativement, les radiations du premier domaine spectral et les radiations du second domaine spectral, chaque bande recouvrant au moins une ligne (L1, L2, ..., Ln) de la matrice de cellules du détecteur (4).

4. Caméra d'observation bispectrale selon l'une des revendications 2 et 3, caractérisée en ce que le premier domaine spectral est le domaine des radiations visibles et en ce que le second domaine spectral est le domaine des radiations infrarouges.

5. Caméra d'observation bispectrale selon l'une des revendications 2 et 3, caractérisée en ce que le premier domaine spectral est un domaine étendu couvrant le domaine visible et le domaine infrarouge, fournissant un signal vidéo de sortie (S'), en ce que le second domaine spectral est l'un des deux domaines visible et infrarouge fournissant le signal vidéo de sortie (S2) et en ce que le premier signal vidéo de sortie (S1) est reconstitué par différence entre (S') et (S2).

6. Caméra d'observation bispectrale selon la revendication 1, caractérisée en ce que le moyen de filtrage bispectral (3) est constitué de deux filtres (32, 33) ayant la forme de deux demi-disques disposés sur un support (31) recouvrant totalement le détecteur (4) et tournant autour d'un axe (A) situé hors du détecteur (4), et transmettant, successivement, le premier domaine spectral et le second domaine spectral.

7. Caméra d'observation bispectrale selon la revendication 6, caractérisée en ce que le moyen de filtrage (3) produit un filtrage en mode bispectral de trame, le support (31) tournant à une vitesse de rotation telle qu'un demi-tour soit effectué pendant le temps d'intégration de charges correspondant à une trame, en coïncidence avec le filtrage du faisceau lumineux incident (12) par l'un des deux filtres (32) ou (33).

8. Caméra d'observation bispectrale selon la revendication 6, caractérisé en ce que le moyen de filtrage (3) produit un filtrage en mode bispectral d'image, le support (31) tournant à une vitesse de rotation telle qu'un demi-tour soit effectué pendant le temps d'intégration des charges de deux trames formant une image, en coïncidence avec le filtrage du faisceau lumineux incident (12) par l'un des deux filtres (32) ou (33).

9. Caméra d'observation bispectrale selon la revendication 7, caractérisée en ce que deux secteurs opaques (35) et (36) opposés par le sommet séparent les deux filtres (32, 33) en forme de secteurs, les passages des secteurs opaques sur le détecteur (4) coïncidant avec les changements de trame.

10. Caméra d'observation bispectrale selon la revendication 8, caractérisée en ce que quatre secteurs opaques (35 à 38) opposés deux à deux par le sommet séparent chacun des deux filtres (32, 33) en deux secteurs, respectivement (32', 32'')

et (33′, 33″), les passages des secteurs opaques sur le détecteur (4) coïncidant avec les changements de trame.

11. Caméra d'observation bispectrale selon l'une des revendications 9 ou 10, caractérisée en ce que des atténuateurs optiques sont disposés sous forme de secteurs sur l'élément filtrant divisé en secteurs (32, 33 ; 32′, 32″, 33′, 33″), et activés par l'intermédiaire d'un collecteur circulaire (13), pour régler l'angle d'éclairement reçu par chaque secteur (32, 33 ; 32′, 32″, 33′, 33″) divisé en sous-secteurs de largeurs égales à celles des atténuateurs les recouvrant, la lumière traversant seulement les atténuateurs optiques activés et les sous-secteurs sous-jacents.

FIG.1

**FIG.2a**

ZA  C1 C2 C3 C4  ZA Cp  S

Ln L5 L4 L3 L2 L1

42 41 30 400

B1 B2 B3 B4 Bp

CIRCUIT DE COMMANDE

5

EP 0 504 023 A1

$Z_0$

$B_1$   $B_2$   $B_P$

FIG.2b

32   33

A

M   C

31

FIG.3a

FIG.3b

32

34

33

35

31

FIG.3c

32'

34

33'

37

36

32"

33"

35

31

FIG.3d

201

13

321

322

323

324

325  A01  326  31

Office européen
des brevets

**RAPPORT DE RECHERCHE EUROPEENNE**

Numero de la demande

EP    92 40 0588

| DOCUMENTS CONSIDERES COMME PERTINENTS | | | |
|---|---|---|---|
| Catégorie | Citation du document avec indication, en cas de besoin, des parties pertinentes | Revendication concernée | CLASSEMENT DE LA DEMANDE (Int. Cl.5) |
| Y | PATENT ABSTRACTS OF JAPAN vol. 9, no. 314 (P-412)(2037) 10 Décembre 1985 & JP-A-60 144 677 ( MITSUBISHI ) 31 Juillet 1985 * abrégé * | 1-5 | H04N5/33 H04N5/225 |
| | --- | | |
| Y | PATENT ABSTRACTS OF JAPAN vol. 13, no. 176 (E-749)(3524) 25 Avril 1989 & JP-A-1 005 185 ( NIKON ) 10 Janvier 1989 * abrégé * | 1-5 | |
| | --- | | |
| A | WO-A-8 401 872 (GX-HOLDING AG) 10 Mai 1984 * page 5, ligne 29 - ligne 36; figures 7,8 * | 1-4,6-9 | |
| | --- | | |
| A | PATENT ABSTRACTS OF JAPAN vol. 12, no. 443 (P-790)(3290) 22 Novembre 1988 & JP-A-63 172 929 ( ISHIKAWAJIMA ) 16 Juillet 1988 * abrégé * | 1,6 | |
| | --- | | |
| A | EP-A-0 412 886 (THOMSON-CSF) 13 Février 1991 * abrégé; figure 1 * | 1 | **DOMAINES TECHNIQUES RECHERCHES (Int. Cl.5)** |
| | ----- | | H04N |

Le présent rapport a été établi pour toutes les revendications

| Lieu de la recherche | Date d'achèvement de la recherche | Examinateur |
|---|---|---|
| LA HAYE | 08 MAI 1992 | DOCKHORN H.S. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)